# EUROPEAN PATENT APPLICATION

(11) **EP 0 671 651 A1**
(43) Date of publication of application: **13.09.1995**
(21) Application number: 95102732.5
(22) Date of filing: 25.02.1995
(51) Int. Cl.: G03B 13/10

(54) **Camera viewfinder mask with pincushion shaped aperture**

(30) Priority: 11.03.1994 US 212072
(71) Applicant: EASTMAN KODAK COMPANY, Rochester, New York 14650 (US)
(72) Inventor: Lyon, Ralph M., c/o Eastman Kodak Co., Rochester, New York 14650-2201 (US); Lewis, Alan E., c/o Eastman Kodak Co., Rochester, New York 14650-2201 (US)
(74) Representative: Blickle, K. Werner, Dipl.-Ing.

(57) **Abstract**

A mask (20) for the viewfinder (15) of a photographic camera (10) has a pincushion shaped aperture for reducing or eliminating the effects of pupil distortion in the viewfinder field which typically show up as a barrel shaped periphery. The mask (20) can be either a component part of, or integrally part of the camera housing (14), and can be located in the front surface of the camera body or within the cavity for the viewfinder optics. The mask (20) includes an opaque border around the pincushion shaped aperture (22), one side of which is dark and which faces the viewer's eye, for reducing spurious reflections. The mask can be positioned substantially in contact with the surface of the viewfinder (15) optics closest to the object or separated in front thereof by a nominal distance depending on design of the camera assembly. A method is also described for reducing the effects of pupil distortion in a viewfinder field of view format presented to a viewer's eye.

## Description

### Field of the Invention:

This invention relates generally to photographic camera viewfinders, and more particularly to a viewfinder mask having a pincushion shaped aperture for improving the field of view format presented by the viewfinder, and to a method of reducing the effects of pupil distortion in a viewfinder field of view.

### Background of the Invention:

A simple photographic camera typically has an optical system for imaging an object into a format on a frame of light sensitive film, a viewfinder that includes one or more lenses for helping the photographer view the scene to be imaged, and a camera shell, or body, that has one or more apertures and/or cavities to allow fight to get to the optical system and viewfinder and to accomodate mechanical components of the camera, for example, a film advance control mechanism.

Often, the camera viewfinder is located within an apertured viewfinder cavity, and the sidewalls of the cavity act like an awning over parts of the viewfinder lens system that are recessed in the cavity. Thus some of the light that would ordinarily pass through the viewfinder is vignetted, or blocked, by the sidewalls causing shading which is particularly noticeable at the comers of the viewfinder field. In particular, when the viewfinder cavity aperture has a typical rectangular shape, the aberration due to the dark comers of the viewfinder field gives the scene being viewed by the user a barrel shaped periphery rather than one having a more desirable rectangular border.

The inventors refer to the aberration discussed above as "pupil distortion." Pupil distortion differs from, and should not be confused with, "system distortion," which is an image aberration caused by defects in the optical components that produce either a barrel or pincushion distorted image. The inventors recognize that the effects of pupil distortion detract from viewing comfort and user satisfaction.

It is therefore an object of the invention to provide a camera including a viewfinder which is substantially free of the effects of pupil distortion.

It is a further object of the invention to provide a mask for a viewfinder that substantially eliminates the effects of pupil distortion.

### Summary of the Invention:

The above mentioned needs are attained by providing a mask for a camera viewfinder in which the mask is characterized by a diaphragm having a perimeter sized and shaped to cooperatively engage the viewfinder and an aperture within the perimeter having an incurving, substantially circular sidewall, whereby the shape of the aperture specifically controls the vignetting about the periphery of the field of view as seen through the viewfinder to present a rectangular format to the eye of the viewer instead of an otherwise barrel shaped format.

In a preferred embodiment of the invention, the mask aperture has a rectangular pincushion shape oriented to generally correspond to the perimetal orientation of the viewfinder objective lens. The four intersecting, interior, arcuate sidewalls of the mask define the length and width, respectively, of the aperture, and the aperture shape which is determined by a raytracing procedure described below. Further information regarding the ray trace procedure for determining the aperture shape can be found in U.S. Patent Application Serial No. 07/938,966, filed September 1, 1992, incorporated herein by reference. Furthermore, the diaphragm surface between the mask perimeter and the aperture sidewalls is opaque to visible light. The side of the mask facing the viewers eye is black, or at least darkened in color, to reduce undesirable reflections from the viewfinder surfaces from reaching the viewer's eye.

In one aspect of the invention, the mask is constructed as an integral part of the camera.

In another aspect of the invention, the mask is an individual component installed in the camera during assembly.

In each aspect of the invention mentioned above, the mask can be located in the front surface of the camera body or recessed to be at a desired location in the viewfinder cavity, as long as the mask is ultimately located on the object side of the viewfinder optical assembly so that the mask acts as a field stop to control the field of view format that the viewer will see. In each case, the mask is substantially a two-dimensional, rectangular diaphragm having a pincushion shaped aperture with an opaque boundary. The mask can be in contact with the first physical surface of the viewfinder optics or separated by a nominal distance therefrom, depending on the mounting design of the camera assembly. In the latter case, the separation distance is between about 0.010 - 0.080 inches (0.254 - 2.032 mm.).

The size and shape of the aperture allow incoming light to reach those areas of the viewfinder field where it was previously shaded by the rectangular viewfinder aperture so that the periphery of the viewfinder field of view is free of the effects of pupil distortion and a more desirable format is presented to the viewer's eye.

These and other objects and advantages of the invention will be more apparent in view of the drawings and the detailed description which follow.

### Description of the Drawings

Figure 1 is a perspective illustration of a camera having the pincushion shaped, viewfinder aperture mask of the invention;
Figure 2 is a front elevational view of the front surface of the camera body showing the viewfinder cavity aperture with an installed mask;
Figure 3 is a cross sectional view of Figure 2 through line 3-3 showing the relative orientation between the viewfinder cavity aperture, the mask aperture, and the viewfinder optics;
Figure 4 is a rear elevational view of the rear of the camera body surface of Figure 2 illustrating the opacity of the viewfinder mask;
Figure 5 is a front elevational view of a component mask having a pincushion shaped aperture showing typical maximum and minimum dimensions of the mask according to the embodiment of Figures 1-4;
Figure 6 is a side elevational view of the mask of Figure 5;
Figure 7 is an illustrative side view of the viewfinder optics on the optical axis showing the relationship between the minimum width of the pincushion aperture to the clear aperture of the viewfinder objective lens;
Figure 8 is an exaggerated illustration of a scene seen through a viewfinder having a conventional rectangular aperture showing darkened comers due to vignetting; and
Figure 9 is a representative illustration of the scene of Figure 8 as seen by the viewer when the pincushion shaped aperture mask of Figure 1 is in place.

### Detailed Description of the Invention

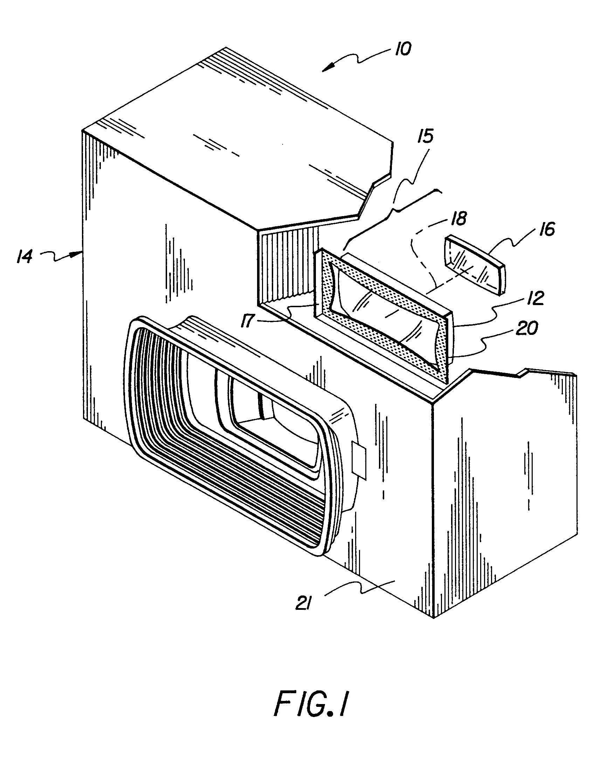

According to an embodiment of the invention as shown in Figure 1, a simple camera 10 comprises a camera body 14 having an apertured viewfinder cavity 17, a viewfinder 15 located within the viewfinder cavity 17, including first lens 12 and a second lens 16, disposed along an optical axis 18, and a viewfinder mask 20 disposed within cavity 17.

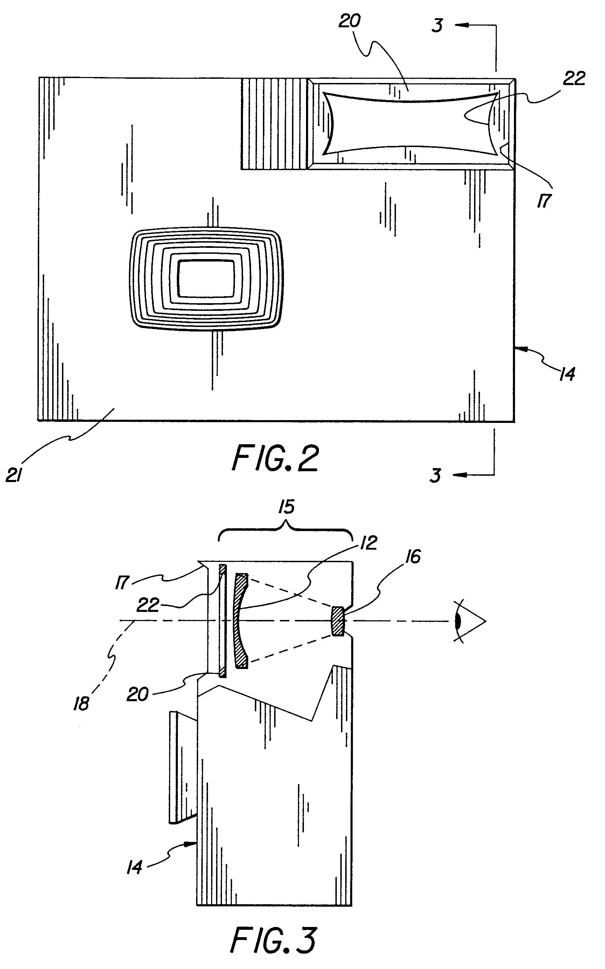

The front outside surface 21 of camera body 14, including the viewfinder mask 20 of the invention located in camera viewfinder cavity 17 is shown in Figure 2.

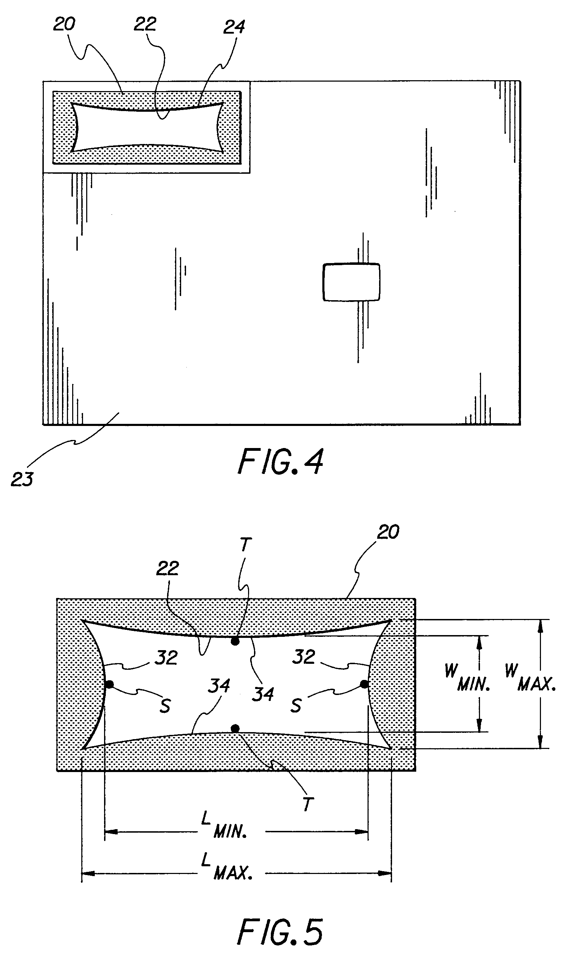

As shown in Figure 3, which is a cross sectional side view of Figure 2 along lines 3-3, a mask 20 is located within viewfinder cavity 17, and adjacent lens 12 of viewfinder 15 on the object side thereof. The mask 20, and viewfinder lenses 12, 16, are cooperatively centered along the viewfinder optical axis 18.

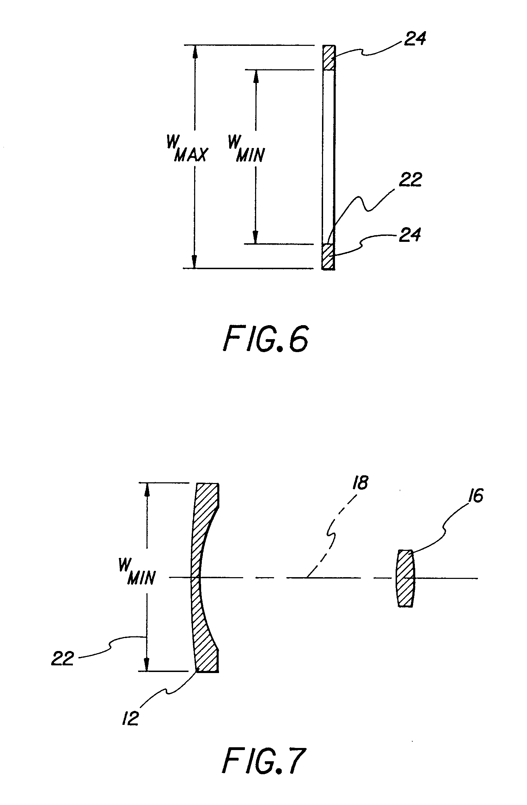

With reference to Figures 4-7, viewfinder mask 20 has a rectangular periphery, and contains a pincushion shaped mask aperture 22. The surface of the mask 20 is opaque, and the back surface 24 is preferably black to minimize unwanted reflections into the viewer's eye, as is shown in Figure 4 which is a view of the inside portion 23 of the front surface of camera body 14.

The pincushion shaped mask aperture 22 is generally defined by 2 pairs of intersecting arcuate boundary sections, or interior sidewalls 32, 34, in which the arcuate sections of each pair oppose one another; i.e., they are incurving with respect to their opposite sidewall. Interior sidewalls 32 and 34 of mask 20, respectively, define the width and length dimensions of mask aperture 22. Because of the pincushion shape of mask aperture 22, interior and exterior aperture widths are represented as Wₘᵢₙ and Wₘₐₓ, and interior and exterior aperture lengths are represented as Lₘᵢₙ and Lₘₐₓ, as depicted in Figure 5.

Although the lens format determines the field of view and thus the basic size of the viewfinder mask aperture, it is pupil distortion that effects the shape of the aperture. The proper shape of the viewfinder mask aperture is obtained by following a ray trace procedure knowing the format size of the system and thus knowing the field of view. Three extreme rays are traced through the system backward from the eye. These rays correspond to the top, side and the corner field of view. The rays corresponding to the top T and the side S of the format, as shown in Figure 5, are traced. They are verified by their exiting angles, which must be equal to the top and side half field of views, as the proper field rays. It should also be verified that the two extreme top and side rays intersect the surface corresponding to the view finder mask at the same location along the optical axis. These intersections correspond to the mask aperture at mid-top and mid-side points T, S, respectively. Next, a three dimensional ray trace of the corner ray is performed. The ray is traced from the corner eye pupil at an angle determined by the format of the field of view of the camera. When the corner ray emerges from the optical system, the horizontal and vertical components of the angle of the emerging ray should be the same as for the top and the side rays. If these components do not match the exiting angles for the top and the side rays, the slightly different ray has to he traced again. This iterative process is repeated until the corner ray components substantially match those of the top and side ray. The coordinates of the corner at the view finder mask location is then determined. The coordinates define the location of the comers for the mask aperture. Once the location of the aperture's mid-top, mid-side and corner coordinates are known, they are connected by a substantially circular curve. This procedure defines the shape of the aperture of the viewfinder mask and is described in greater detail in the above referenced pending application.

In the aspect of the invention described wherein the mask 20 is a separate component from the camera body 14 and is installed in the camera 10 upon assembly, the mask is preferably of plastic construction having a typical thickness of approximately 0.040 inches (1.016 mm). The thickness is not a critical aspect of the viewfinder mask as long as the mask has structural integrity; however, it is desireable to have a substantially two dimensional mask so that the field of view format remains sharply defined.

In another aspect of the invention in which the mask 20 is made as an integral part of camera body 14 itself, the mask 20 is constructed of cardboard or other similar material and typically has a thickness of approximately 0.016 inches (0.381 mm). The material used to construct the mask in any event is not critical to the function of the present invention. Alternatively, the viewfinder mask 20 can be constructed directly into the design of the cardboard cover (not shown), such as those typically used in single use type cameras for encasing the camera body 14.

The black rear surface 24 of the mask 20 faces towards the viewer's eye to minimize unwanted reflections from the surfaces of the viewfinder. Furthermore, the mask 20 can be located substantially in contact with the front surface of viewfinder lens 12, or spaced a nominal distance therefrom; preferably in the range between about 0.010 to 0.080 inches (0.254 to 2.032 mm) in front of lens 12. In each aspect of the invention, it is desireable to position the viewfinder mask as far in front of the viewer's eye as possible to help the viewer accomodate to the aperture boundary.

In the embodiment of the invention shown in Figures 5-7, the dimensions of the mask aperture are as follows:
Wₘₐₓ = 8.644 mm;
Wₘᵢₙ = 8.341 mm;
Lₘₐₓ = 26.134 mm; and
Lₘᵢₙ = 25.795 mm.
The extremum points of each sidewall and the corresponding point S, T, are connected by a substantially circular curve to define the actual pincushion shape of the aperture. It will be appreciated that these dimensions are exemplary and depend on the particular lens elements used in the viewfinder, and therefore are not restricted to the particular dimensions given.

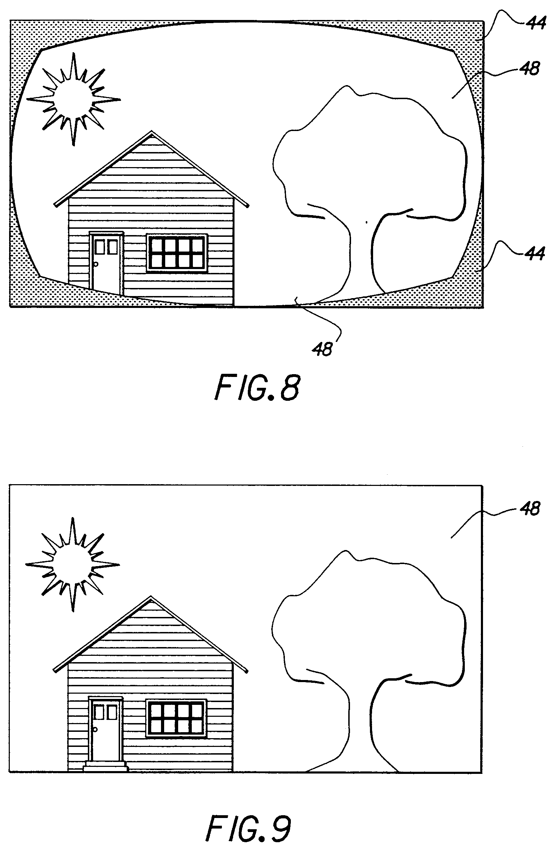

An exaggerated example of the undesirable effects of pupil distortion found in viewfinder fields of the prior art is shown in Figure 8. The shading of light from the corners 44 of the viewfinder field 48 due to the presence of a rectangular aperture in front of viewfinder lens 12 renders the scene barrel shaped. Controlling the vignetting about the periphery of the viewfinder field of view by use of mask 20 having a pincushion shaped mask aperture 22 eliminates the deleterious effects of pupil distortion, and presents the rectangular field format 48 as shown in Figure 9 to the viewer's eye.

It will be apparent to a person skilled in the art that the foregoing description of the invention is merely exemplary and minor changes, modifications and additions to the invention as described are possible and wholly within the scope of the invention as claimed.

### The invention is summarized as follows:

1. A mask for a camera viewfinder is characterized by:
   a diaphragm having a perimeter sized and shaped to cooperatively engage the viewfinder and an aperture within said perimeter, said aperture partially defined by an incurving sidewall, in which the mask is adjacent an external object-side surface of the viewfinder.
2. The mask of 1 in which the incurving sidewall has a substantially circular contour.
3. The mask of 1 in which the aperture has a pincushion shaped periphery.
4. The mask of Claim 1 in which the diaphragm has an opaque surface between the sidewall and said perimeter.
5. A camera comprising a camera body having a viewfinder cavity, and an optical viewfinder disposed along an optical axis passing through the viewfinder cavity, is characterized by:
   a viewfinder mask having a pincushion shaped aperture adjacent an external object side of the viewfinder and aligned along the optical axis.
6. The camera of 5 in which said mask includes at least one incurving interior sidewall defining a width and at least one interior sidewall defining a length wherein the defined length is greater than the defined width.
7. The camera of 6 in which the at least one incurving interior sidewall has a substantially circular contour.
8. The camera of 5 in which said mask includes at least one incurving interior sidewall defining a width and at least one interior sidewall defining a length wherein the defined length is not equal to the defined width.
9. The camera of 8 in which the at least one incurving interior sidewall has a substantially circular contour.
10. The camera of 5 in which the mask is substantially in contact with the optical viewfinder.
11. The camera of 5 in which a portion of the mask is opaque.
12. The camera of 5 in which the mask is an integral part of the camera body.
13. A camera housing comprising a viewfinder cavity, is characterized by:
   a viewfinder aperture having a pincushion shaped periphery.
14. The camera housing of 13 in which the viewfinder aperture is located in a front surface of the camera housing.
15. The camera housing of 13 in which the viewfinder aperture is in a recessed location in the viewfinder cavity.
16. The camera housing of 13 comprising a border which surrounds said viewfinder aperture.
17. The camera housing of 16 in which the border is opaque to visible light.
18. A method of reducing an aberration in a field of view presented to a viewer's eye by a camera viewfinder, comprising the step of:
   locating a viewfinder mask having a pincushion shaped aperture adjacent an external object side of the camera viewfinder for controlling vignetting about a periphery of the field of view.
19. The method of 18 wherein the step of locating a viewfinder mask having a pincushion shaped aperture adjacent an external object side of the camera viewfinder further comprises
   changing a nonrectangular field of view format seen by the viewer to a substantially rectangular field of view format.
20. The method of 19 wherein the step of changing a nonrectangular field of view format seen by the viewer to a substantially rectangular field of view format further comprises compensating for an effect of pupil distortion from the field of view format presented to the viewer by the camera viewfinder.

### Parts list for Figures 1-9

- 10: camera
- 12: first lens of viewfinder
- 14: camera body
- 15: viewfinder
- 16: second lens of viewfinder
- 17: viewfinder cavity
- 18: optical axis
- 20: viewfinder mask
- 21: front outside surface of camera body
- 22: mask aperture
- 23: inside portion of front surface of camera
- 24: back surface of mask
- 32, 34: interior sidewalls of mask
- 44: corners of viewfinder field
- 48: viewfinder field format

## Claims

1. A mask for a camera viewfinder is characterized by:
a diaphragm having a perimeter sized and shaped to cooperatively engage the viewfinder and an aperture within said perimeter, said aperture partially defined by an incurving sidewall, in which the mask is adjacent an external object-side surface of the viewfinder.

2. A camera comprising a camera body having a viewfinder cavity, and an optical viewfinder disposed along an optical axis passing through the viewfinder cavity, is characterized by:
a viewfinder mask having a pincushion shaped aperture adjacent an external object side of the viewfinder and aligned along the optical axis.

3. The camera of Claim 2 in which said mask includes at least one incurving interior sidewall defining a width and at least one interior sidewall defining a length wherein the defined length is greater than the defined width.

4. The camera of Claim 3 in which the at least one incurving interior sidewall has a substantially circular contour.

5. The camera of Claim 2 in which said mask includes at least one incurving interior sidewall defining a width and at least one interior sidewall defining a length wherein the defined length is not equal to the defined width.

6. The camera of Claim 5 in which the at least one incurving interior sidewall has a substantially circular contour.

7. A camera housing comprising a viewfinder cavity, is characterized by:
a viewfinder aperture having a pincushion shaped periphery.

8. A method of reducing an aberration in a field of view presented to a viewer's eye by a camera viewfinder, comprising the step of:
locating a viewfinder mask having a pincushion shaped aperture adjacent an external object side of the camera viewfinder for controlling vignetting about a periphery of the field of view.

9. The method of claim 8 wherein the step of locating a viewfinder mask having a pincushion shaped aperture adjacent an external object side of the camera viewfinder further comprises
changing a nonrectangular field of view format seen by the viewer to a substantially rectangular field of view format.

10. The method of claim 9 wherein the step of changing a non-rectangular field of view format seen by the viewer to a substantially rectangular field of view format further comprises compensating for an effect of pupil distortion from the field of view format presented to the viewer by the camera viewfinder.
